# EUROPÄISCHE PATENTSCHRIFT

(11) **EP 4 087 095 B1**
(45) Veröffentlichungstag und Bekanntmachung des Hinweises auf die Patenterteilung: **04.06.2025**
(21) Anmeldenummer: 22170521.3
(22) Anmeldetag: 28.04.2022
(51) Int. Cl.: H02K 1/32, H02K 7/04, H02K 3/24, H02K 9/19

(54) **ELEKTRISCHE MASCHINE MIT ROTORKÜHLUNG**
ELECTRIC MACHINE WITH ROTOR COOLING
MACHINE ÉLECTRIQUE À REFROIDISSEMENT DU ROTOR

(30) Priorität: 07.05.2021 DE 102021204671
(43) Veröffentlichungstag der Anmeldung: 09.11.2022
(73) Patentinhaber: Magna PT B.V. & Co. KG, 74199 Untergruppenbach (DE)
(72) Erfinder: STRIEDELMEYER, Thomas, 70378 Stuttgart (DE)
(74) Vertreter: Rausch, Gabriele

(56) Entgegenhaltungen:
- WO-A1-2020/217075
- JP-A- 2009 118 686
- JP-A- 2018 191 363
- US-A1- 2020 021 155

## Beschreibung

Die Erfindung betrifft eine elektrische Maschine mit Stator und Rotor, wobei der Rotor Rotorblechpakete auf einer Welle montiert aufweist, wobei die Welle einen Ölkanal umfasst, und die Rotorblechpakete Kanäle parallel zur Achse der Welle und Abschlussscheiben endseitig aufweisen, wobei der Ölkanal Queröffnungen aufweist.

### Stand der Technik

Bei elektrischen Maschinen werden Permanentmagnete mit Seltenen Erden eingesetzt. Wird der Permanentmagnet zu heiß, besteht die Gefahr der Entmagnetisierung, wodurch die elektrische Maschine irreparabel Schaden nehmen kann. Daher ist bei Hybridfahrzeugen die Kühlung der elektrischen Maschine ein wesentlicher Faktor, unabhängig von der speziellen Einbauart.

Besonders problematisch ist das Wärmemanagement in den 2,5- Hybrid-Architekturen. Ein Beispiel eines solches Getriebes findet sich in der DE 10 2010 004 711 C5. Durch die spezielle Anbindung kommt es beim Fahren mit hoher Fahrzeuggeschwindigkeit zu höheren Drehzahlen an der elektrischen Maschine, die durchaus über Minuten andauern können.

Durch die in der elektrischen Maschine auftretenden hohen Verluste kommt man dadurch in den Bereich, in dem die Temperaturen für die Magnete bereits kritisch werden.

Deshalb muss aktiv Wärme aus den Rotorblechen und den magnetnahen Bereichen entnommen werden, um das elektrische System länger ohne Limitierung betreiben zu können.

Die JP 2011 254 580 A zeigt eine elektrische Maschine mit Stator und Rotor. Ein Kältemittelströmungsweg ist entlang der Rotorachse vorgesehen, wobei das Kühlmittel über Öffnungen aus der Rotorwelle austritt und in Endplatten zu Längskanälen in den Rotorblechen strömt.

Aus der JP 2009- 118 686 A sind die Merkmale des Oberbegriffs des Anspruchs 1 umfasst.

Der in der zweiten Ebene angeordnete Kühlpfad verläuft über den Ölkanal in der Rotorwelle und einen Verteilerport und über eine Schalteinheit, die von einer Feder vorgespannt ist. Hält die Feder den Verteilerport geöffnet, kann Kühlmittel in die Kanäle des Rotorblechpakets fließen. Allerdings erfolgt der Ölfluss der beiden Kühlwege nicht parallel und immer gleichzeitig. Vielmehr erfolgt eine Steuerung der beiden Kühlpfade, so dass entweder der eine oder der andere Kühlölpfad aktiv ist.

WO 2019/ 049 397 A1 zeigt eine Kühlung mit einem Kühlkanal, der eine einzige Zufuhr über eine Verbindungsöffnung aufweist. Das Kühlmittel wird nicht über eine Rotorwelle abgeschleudert, sondern mit einer Pumpe speziell für die Rotorkanäle zur Verfügung gestellt. Es spritzt kein Öl durch Fliehkraft aus einer Bohrung auf einen Absatz.

Aus der JP 2019- 30 051 A ist ebenfalls eine Umlenkung eines eingehenden Kühlmittels vorgesehen, das von einer Pumpe geliefert wird. Dabei wird eine taschenartige Struktur angeströmt, sodass ein Rotorkanal mit Kühlmittel versorgt wird.

Auch in der JP 2018- 191 363 A ist nur eine Kühlung für den Rotor vorgesehen, wobei die Rotorkanäle über eine Pumpe direkt mit Kühlmittel beaufschlagt werden. Zur Verteilung dient eine Seitenplatte des Rotors mit Nuten und Öffnungen.

JP 2009 118 686 A zeigt eine elektrische Maschine mit Stator und Rotor, wobei der Rotor Rotorblechpakete auf einer Welle (montiert aufweist, wobei die Welle einen Ölkanalumfasst, und wobei die Rotorblechpakete Kanäle parallel zur Achse der Welle und Abschlussscheiben endseitig der Rotorblechpakete aufweisen, wobei der Ölkanal Querbohrungen aufweist/die auf der Vorderseite der elektrische Maschine in axial zueinander beabstandeten Ebenen angeordnet sind und einen ersten und einen zweiten Kühlölpfad versorgen und eine erste Ebene der Ebenen innerhalb der Dicke einer als Wuchtscheibe ausgelegte Abschlussscheibe und eine zweite Ebene außerhalb der Wuchtscheibe im Bereich von Wickelköpfen der Stators verlaufen, wobei der zweite Kühlölpfad über den Ölkanal und die Querbohrungen verläuft, wobei Öl aus dem Kanal und den Querbohrungen spritzt.

WO 2020 / 217 075 A1 zeigt eine Wuchtscheibe, welche einen Kühlölpfad auf der Vorderseite aufweist, wobei die Wuchtscheibe in die Kanäle des Rotorblechpakets geführt ist und die Wuchtscheibe mindestens einen umlaufenden Absatz aufweist, in dem entlang des Umfangs des Absatzes Durchbrüche oder Taschen zu den Kanälen im Rotorblechpaket vorgesehen sind, die das an dem Absatz aufprallende Öl axial zum Rotor geleitet wird.

Es ist Aufgabe der Erfindung, eine elektrische Maschine mit einem verbesserten Kühlsystem zu schaffen, die eine effiziente Kühlung des Rotors ermöglicht, bei gleichzeitiger Aufrechterhaltung der Stator-Kühlung.

### Beschreibung der Erfindung

Die Aufgabe wird gelöst mit einer elektrischen Maschine mit Stator und Rotor, wobei der Rotor Rotorblechpakete auf einer Welle montiert aufweist, wobei die Welle einen Ölkanal umfasst, und die Rotorblechpakete Kanäle parallel zur Achse der Welle und Abschlussscheiben endseitig aufweisen, wobei der Ölkanal Queröffnungen aufweist, die an der Vorderseite der elektrischen Maschine in axial zueinander beabstandeten Ebenen angeordnet sind.

Durch die Anordnung der Queröffnungen entstehen axial versetzte Ölstrahlen, die von der Welle weggeschleudert werden.

Um sowohl den Stator als auch den Rotor zu kühlen, ist eine erste Ebene innerhalb der Dicke einer als Wuchtscheibe ausgelegte Abschlussscheibe des Rotorblechpakets auf der Vorderseite der elektrischen Maschine und eine zweite Ebene außerhalb der Wuchtscheibe im Bereich von Wickelköpfen des Stators vorgesehen.

Die axial versetzt weggeschleuderten Ölstrahlen gehen einerseits an der Wuchtscheibe vorbei und andererseits direkt in eine interne Struktur der Wuchtscheibe hinein.

Dadurch ergibt sich ein erster Kühlölpfad, der sich entlang des Ölkanals, durch die Querbohrungen der Vorderseite und der Rückseite der elektrischen Maschine erstreckt und das austretende Kühlöl auf Wickelköpfe geschleudert wird.

Der zweiter Kühlölpfad ist über den Ölkanal, die Querbohrungen auf der Vorderseite, die Wuchtscheibe in die Kanäle des Rotorblechpakets geführt.

Die Wuchtscheibe ist so ausgestaltet, dass die Wuchtscheibe mindestens einen umlaufenden Absatz aufweist, in dem entlang des Umfangs des Absatzes Durchbrüche oder Taschen zu den Kanälen im Rotorblechpaket vorgesehen sind.

Der Absatz weist eine Tiefe im Bereich bis zur halben Dicke der Wuchtscheibe auf.

Erfindungsgemäß liegen mehrere Absätze radial beabstandet voneinander mit gestaffelten Tiefen vor.

Eine Wuchtscheibe mit mehreren Absätzen ist geeignet, erfindungsgemäß Kanäle mit unterschiedlichen radialen Abständen entsprechend der Absätze durch das Rotorblechpaket zu führen und so optimal Wärme in der Nähe der Permanentmagneten abzuführen.

### Beschreibung der Figuren

Figur 1 zeigt eine elektrische Maschine im Schnitt,
Figur 2 zeigt dasselbe Schnittbild mit skizzierter Ölführung,
Figur 3 und 4 zeigen eine Aufsicht auf die Vorderseite der elektrischen Maschine,
Figur 5 zeigt einen Längsschnitt durch eine Rotorwuchtscheibe,
Figur 6 zeigt eine Aufsicht auf das Rotorblechpaket innerhalb des Stators.

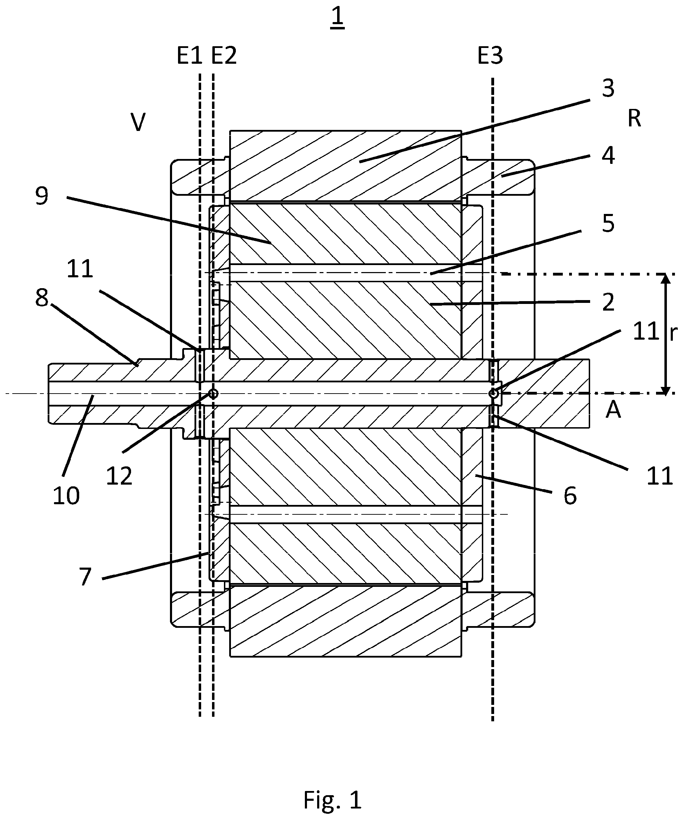

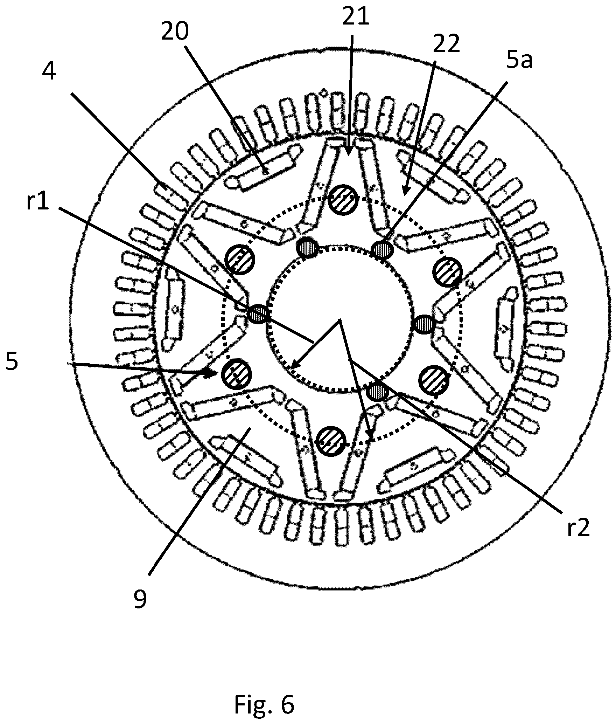

Die Figuren 1-5 entsprechen nicht der Erfindung, da sie lediglich einen Absatz (15) zeigen, an dem Kanäle (5) angeordnet sind. Die Figur 6 hingegen entspricht der Erfindung, da sie mehrere Absätze (15) mit daran angeordneten Kanälen (5,5a) mit unterschiedlich radialen Abständen (r1,r2) zeigt.

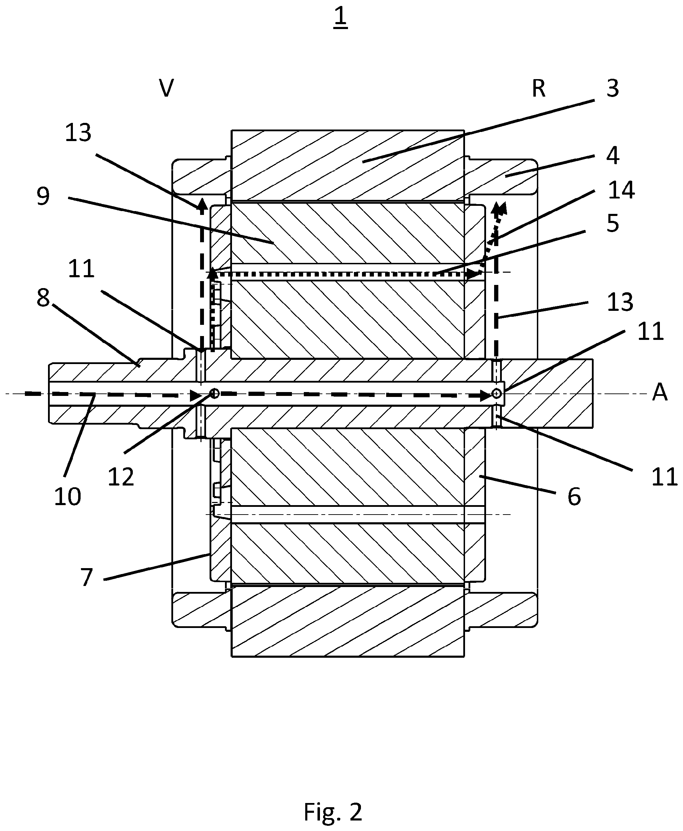

In den Figuren 1 und 2 ist in einem Längsschnitt eine elektrische Maschine 1 dargestellt. Die elektrische Maschine besteht aus den beiden Hauptkomponenten, einem Rotor 2 sowie einem Stator 3. Der Stator 3 weist beidseitig Wickelköpfe 4 auf. Der Rotor 2 ist aus Rotorblechpaketen 9 aufgebaut, die auf einer Welle 8 montiert sind. Die Welle 8 wird auf der Vorderseite V der elektrischen Maschine 1 aus einem, nicht dargestellten, Gehäuse geführt. Innerhalb der Rotorblechpakete 9 sind Kanäle 5 angeordnet, die sich entlang der Achse A erstrecken. Die Anzahl der Kanäle 5 ist dabei dem Kühlproblem anzupassen.

Die Kanäle 5 erstrecken sich beispielsweise entlang eines Radius r im gleichmäßigen radialen Abstand voneinander, welches nicht der Erfindung entspricht, oder sind erfindungsgemäß entlang des Umfangs unterschiedlicher Radien r1,r2 verteilt.

Das Rotorblechpaket 9 ist sowohl auf der Vorderseite V als auch auf der Rückseite R mit einer Abschlussscheibe versehen, die das Rotorblechpaket abdeckt.

Auf der Vorderseite V ist die Abschlussscheibe als Wuchtscheibe 7 mit einer Struktur ausgebildet, auf der Rückseite R ist eine unstrukturierte Abschlussscheibe 6 vorgesehen.

In der Welle 8 des Rotors 2 ist ein Kühlkanal 10 vorhanden, der sich von der Vorderseite V bis zur Rückseite R erstreckt.

Die Welle 8 weist in einer ersten Ebene E1 Querbohrungen 11 auf, sowie in einer zweiten, axial davon beanstandende Ebene E2 Querbohrungen 12. Auf der Rückseite R der elektrischen Maschine 1 sind Querbohrungen 11 in einer einzigen Ebenen E3 vorgesehen.

In der Ebene E1 spritzt das Öl durch die Zentrifugalkraft aus dem Kanal 10 über die Querbohrungen 11 und einem freien Raum auf die Wickelköpfe 4. In der Ebene E2 spritzt Öl aus dem Kanal 10 und den Querbohrungen 12 an die, an der Wuchtscheibe 7 ausgebildete Struktur und wird über die Struktur in die Kanäle 5 der Rotorbleche 9 geführt.

In der Figur 2 ist der Ölfluss über Pfeile dargestellt. Die Kühlung der Wickelköpfe 4 erfolgt über die Querbohrungen 11, sowohl auf der Vorderseite V der elektrischen Maschine als auch auf der Rückseite R. Das Kühlöl wird aus den Öffnungen 11 geschleudert und trifft über den Pfad 13 auf die Wickelköpfe 4. Da der Transport des Öls von der Drehgeschwindigkeit der Welle 8 abhängig ist, sowie von der zur Verfügung gestellten Ölmenge, ist die Kühlung des Wickelkopfs 4 auf der Rückseite R der elektrischen Maschine manchmal schwächer ausgebildet, weil kein Öl mehr ankommt.

Durch den neu eingeführten Kühlölpfad 14 werden aber auch die Wickelköpfe 4 auf der Rückseite R der elektrischen Maschine 1 ausreichend gekühlt. Der Kühlölpfad 14 erstreckt sich zunächst radial von den Querbohrung 12 der Welle 8 ausgehend, trifft auf die im Folgenden näher ausgeführte Struktur der Wuchtscheibe 7, wird umgelenkt und entlang des Kanäle 5 der Rotorbleche 9 geführt. Auf der Rückseite R der elektrischen Maschine 1 tritt dieser Teil des Kühlöls aus und wird in Richtung auf den Wickelkopf 4 an der Rückseite der elektrischen Maschine geschleudert.

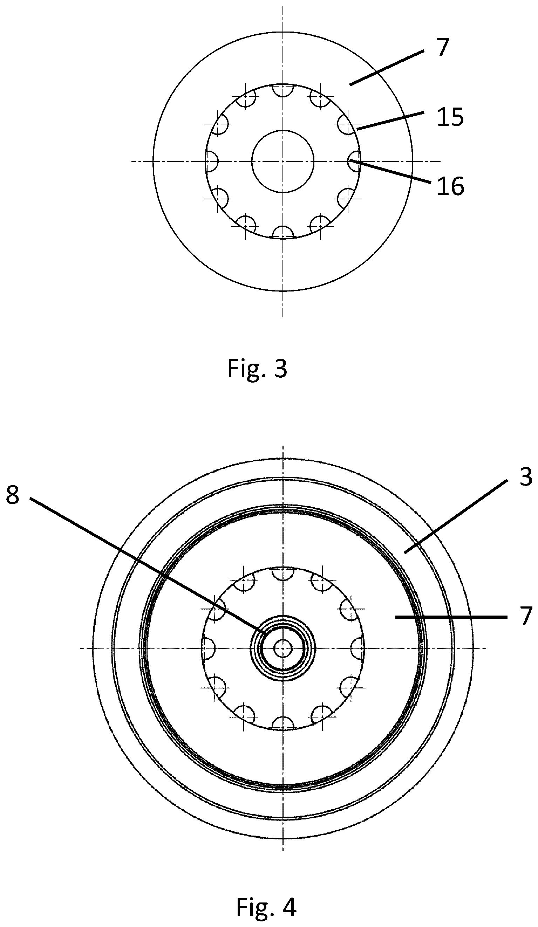

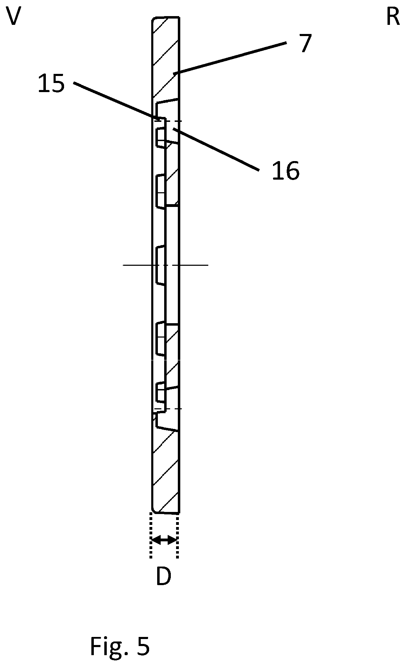

Die in der Zeichnung nicht dargestellten Permanentmagneten sind in den Rotorblechen 9 eingebettet und befinden sich räumlich nahe an den Kanälen 5. Durch das Kühlöl in den Kanälen 5 wird die Wärme der Permanentmagnete abgeführt. Die Figuren 3 und 4 zeigen eine Ansicht auf die Vorderseite V der elektrischen Maschine 1. Ein Schnitt durch die in Figur 3 dargestellte Wuchtscheibe 7 ist in Figur 5 zu erkennen.

Die Wuchtscheibe 7 weist in dem Ausführungsbeispiel einen Absatz 15 auf, in dem sich die Dicke D der Wuchtscheibe nahezu halbiert. Dadurch wird eine Kante mit in etwa der halben Dicke der Wuchtscheibe gebildet. Die Tiefe des Absatzes 15 ist an die spezielle Ausführung der Wuchtscheibe und den Kühlkanälen 5 angepasst.

Die Wuchtscheibe 7 weist zudem axiale Aussparung in Form von Taschen 16 auf, durch die das an dem Absatz 15 aufprallende Öl axial zum Rotor 2 und dann durch die Kanäle 5 geleitet wird.

Zur optimierten Kühlung der elektrischen Maschine wird also ein Teil der Ölmenge von der Wuchtscheibe 7 aufgefangen und axial durch den Rotor 2 geleitet. Das restliche Öl spritzt über Queröffnungen 11 auf die Wickelköpfe und kühlt den Stator.

Figur 6 zeigt die erfindungsgemäße Lösung, die sich nicht auf einen Typ von Kanälen beschränkt.

Die Figur zeigt Wickelkopfe 4, die um die Rotorblechpakete 9 angeordnet sind. Innerhalb der Rotorblechpakete 9 sind Permanentmagnete 20 in einer typischen Anordnung eingebaut. Ein Satz Permanentmagnete 20 liegt entlang des Außenumfangs der Rotorblechpakete 9, weitere Permanentmagnete sind als V angeordnet, alternierend nach innen und nach außen zulaufend. Dadurch ergeben sich Bauräume 21 und 22 jeweils in den Zwickeln zwischen zwei Permanentmagneten 20. Kanäle 5 sind auf einem Umfang des ersten Radius r1 im Bauraum 21 verteilt eingebracht. Zusätzlich sind Kanäle 5a entlang eines Umfangs mit Radius r2 vorhanden, die in diesem Beispiel einen geringeren Innendurchmesser aufweisen als die Kanäle 5.

Eine weitere vorteilhafte Anordnung verwendet Kanäle, die im Bauraum 22 benachbart zu drei Permanentmagneten 20 angeordnet sind.

Damit alle Kanäle 5, 5a mit Öl versorgt werden können ist die Wuchtscheibe erfindungsgemäß entsprechend angepasst durch weitere Absätze 15 und Taschen 16 entlang der Umfänge der Radien r1 und r2 usw.

## Patentansprüche

1. Elektrische Maschine (1) mit Stator (3) und Rotor (2), wobei der Rotor (2) Rotorblechpakete (9) auf einer Welle (8) montiert aufweist, wobei die Welle (8) einen Ölkanal (10) umfasst, und wobei die Rotorblechpakete (9) Kanäle (5) parallel zur Achse (A) der Welle (8) und Abschlussscheiben (6, 7) endseitig der Rotorblechpakete (9) aufweisen, wobei der Ölkanal (10) Querbohrungen (11, 12) aufweist, die auf einer Vorderseite (V) der elektrische Maschine (1) in axial zueinander beabstandeten Ebenen (E1, E2) angeordnet sind und einen ersten und einen zweiten Kühlölpfad versorgen und eine erste Ebene (E2) der Ebenen (E1, E2) innerhalb der Dicke (D) einer als Wuchtscheibe (7) ausgelegte Abschlussscheibe verläuft und eine zweite Ebene (E1) außerhalb der Wuchtscheibe (7) im Bereich von Wickelköpfen (4) des Stators (3) verläuft, **dadurch gekennzeichnet, dass** der zweite Kühlölpfad über den Ölkanal (10), die Querbohrungen (12) , wobei Öl aus dem Kanal (10) und den Querbohrungen (12) spritzt, auf der Vorderseite (V), über die Wuchtscheibe (7) in die Kanäle (5) des Rotorblechpakets (9) geführt ist und die Wuchtscheibe (7) mindestens einen umlaufenden Absatz (15) aufweist, in dem entlang des Umfangs des Absatzes Durchbrüche oder Taschen (16) zu den Kanälen (5) im Rotorblechpaket vorgesehen sind, die das an dem Absatz (15) aufprallende Öl axial zum Rotor (2) leiten, wobei mehrere Absätze (15) radial beabstandet voneinander mit gestaffelter Tiefe vorliegen und Kanäle (5,5a) mit unterschiedlichen radialen Abständen (r1, r2) entsprechend der Absätze (15) durch das Rotorblechpaket (9) führen.

2. Elektrische Maschine (1) nach Anspruch 1, **dadurch gekennzeichnet, dass** sich ein erster Kühlölpfad entlang des Ölkanals (10), durch die Querbohrungen (11) der Vorderseite (V) und einer der Rückseite (R) der elektrischen Maschine erstreckt und das austretende Kühlöl auf die Wickelköpfe (4) geschleudert wird.

3. Elektrische Maschine (1) nach Anspruch 1, **dadurch gekennzeichnet, dass** der Absatz (15) eine Tiefe bis zu der halben Dicke (D) der Wuchtscheibe (7) aufweist.

## Claims

1. Electric machine (1) with a stator (3) and rotor (2), wherein the rotor (2) has rotor laminated cores (9) mounted on a shaft (8), wherein the shaft (8) comprises an oil channel (10), and wherein the rotor laminated cores (9) have channels (5) parallel to the axis (A) of the shaft (8) and terminating discs (6, 7) at the ends of the rotor laminated cores (9), wherein the oil channel (10) has transverse bores (11, 12) which are arranged on a front side (V) of the electric machine (1) in axially spaced-apart planes (E1, E2) and which provide a supply to a first and a second cooling-oil path, and a first plane (E2) of the planes (E1, E2) extends within the thickness (D) of a terminating disc designed as a balancing disc (7) and a second plane (E1) extends outside the balancing disc (7) in the region of winding heads (4) of the stator (3), **characterized in that** the second cooling-oil path is routed into the channels (5) of the rotor laminated core (9) via the oil channel (10) and the transverse bores (12) on the front side (V), wherein oil sprays out of the channel (10) and the transverse bores (12), and via the balancing disc (7), and the balancing disc (7) has at least one encircling shoulder (15) in which provision is made along the circumference of the shoulder of apertures or pockets (16) to the channels (5) in the rotor laminated core, which direct the oil impinging on the shoulder (15) axially to the rotor (2), wherein provision is made of multiple shoulders (15) spaced apart radially from one another with staggered depths, and channels (5, 5a) with different radial spacings (r1, r2), corresponding to the shoulders (15), lead through the rotor laminated core (9).

2. Electric machine (1) according to Claim 1, **characterized in that** a first cooling-oil path extends along the oil channel (10) and through the transverse bores (11) of the front side (V) and of a rear side (R) of the electric machine, and the exiting cooling oil is centrifuged onto the winding heads (4).

3. Electric machine (1) according to Claim 1, **characterized in that** the shoulder (15) has a depth of up to half the thickness (D) of the balancing disc (7).

## Revendications

1. Machine électrique (1) avec stator (3) et rotor (2), le rotor (2) présentant un noyau feuilleté de rotor (9) monté sur un arbre (8), l'arbre (8) comprenant un canal d'huile (10), et le noyau feuilleté de rotor (9) comportant des canaux (5) parallèles à l'axe (A) de l'arbre (8) et des disques d'extrémité (6, 7) aux extrémités du noyau feuilleté de rotor (9), le canal d'huile (10) comprenant des alésages transversaux (11, 12) qui sont disposés sur une face avant (V) de la machine électrique (1) dans des plans (E1, E2) espacés axialement l'un de l'autre et qui alimentent un premier et un deuxième cheminements d'huile de refroidissement, et un premier plan (E2) parmi les plans (E1, E2) s'étendant à l'intérieur de l'épaisseur (D) d'un disque d'extrémité conçu en tant que disque d'équilibrage (7) et un deuxième plan (E1) s'étendant à l'extérieur du disque d'équilibrage (7) dans la zone des têtes de bobinage (4) du stator (3), **caractérisée en ce que** le deuxième cheminement d'huile de refroidissement est guidé par le canal d'huile (10) et les alésages transversaux (12), l'huile étant projetée à partir du canal (10) et des alésages transversaux (12), et l'huile étant guidée sur la face avant (V) du disque d'équilibrage (7) dans les canaux (5) du noyau feuilleté du rotor (9), et le disque d'équilibrage (7) présentant au moins un épaulement périphérique (15) dans lequel sont prévus des passages ou des poches (16) le long de la circonférence de l'épaulement vers les canaux (5) dans le noyau feuilleté du rotor, qui dirigent l'huile venant heurter l'épaulement (15) axialement vers le rotor (2), une pluralité d'épaulements (15) étant agencés radialement à distance les uns des autres avec des profondeurs échelonnées et des canaux (5, 5a) ayant des distances radiales différentes (r1, r2) correspondant aux épaulements (15) qui traversent le noyau feuilleté du rotor (9).

2. Machine électrique (1) selon la revendication 1, **caractérisée en ce qu'**un premier chemin d'huile de refroidissement s'étend le long du canal d'huile (10), à travers les alésages transversaux (11) de la face avant (V) et le long d'une face arrière (R) de la machine électrique, et l'huile de refroidissement sortante est projetée sur les têtes de bobinage (4).

3. Machine électrique (1) selon la revendication 1, **caractérisée en ce que** l'épaulement (15) a une profondeur allant jusqu'à la moitié de l'épaisseur (D) du disque d'équilibrage (7).
